(19) Europäisches Patentamt
European Patent Office
Office européen des brevets

(11) **EP 2 832 525 A1**

(12) **EUROPEAN PATENT APPLICATION**
published in accordance with Art. 153(4) EPC

(43) Date of publication:
**04.02.2015 Bulletin 2015/06**

(21) Application number: **13769770.2**

(22) Date of filing: **08.03.2013**

(51) Int Cl.:
***B29C 55/02*** *(2006.01)* ***C08J 5/18*** *(2006.01)*
***B29K 67/00*** *(2006.01)* ***B29L 7/00*** *(2006.01)*
***B29L 9/00*** *(2006.01)*

(86) International application number:
**PCT/JP2013/056387**

(87) International publication number:
**WO 2013/146174 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2012 JP 2012075609**

(71) Applicant: **Kuraray Co., Ltd.**
**Kurashiki-shi, Okayama 710-0801 (JP)**

(72) Inventors:
- **KONNO, Takafumi**
  **Saijo-shi**
  **Ehime 793-8585 (JP)**
- **SUNAMOTO, Tatsuya**
  **Tokyo**
  **1008115 (JP)**
- **ONODERA, Minoru**
  **Saijo-shi**
  **Ehime 793-8585 (JP)**
- **MATSUNAGA, Shuji**
  **Saijo-shi**
  **Ehime 793-8585 (JP)**
- **OHMORI, Kazuyuki**
  **Saijo-shi**
  **Ehime 793-8585 (JP)**

(74) Representative: **Vossius & Partner**
**Siebertstrasse 4**
**81675 München (DE)**

# (54) THERMOPLASITC LIQUID CRYSTAL POLYMER FILM AND METHOD FOR PRODUCING SAME

(57) A thermoplastic liquid polymer film and a method of producing the same are provided. The method includes preparing a thermoplastic liquid crystal polymer film that has dielectric constants of not larger than 3.25 both in an MD direction and in a TD direction; and performing drawing of the film while heating the film at a temperature in a range from a temperature (Td - 60°C) that is 60°C lower than a heat deformation temperature (Td) of the film to a temperature (Td - 5°C) that is 5°C lower than Td. The temperature of the heating during the drawing of the film may be in a range from a temperature (Td - 40°C) that is 40°C lower than a heat deformation temperature (Td) of the film subjected to the drawing to a temperature (Td - 10°C) that is 10°C lower than Td.



Printed by Jouve, 75001 PARIS (FR)

## Description

CROSS REFERENCE TO THE RELATED APPLICATION

This application is based on and claims Convention priority to Japanese patent application No. 2012-075609, filed March 29, 2012, the entire disclosure of which is herein incorporated by reference as a part of this application.

FIELD OF THE INVENTION

The present invention relates to a film of a thermoplastic polymer being capable of forming an optically anisotropic melt phase (hereinafter, the polymer also referred to as a thermoplastic liquid crystal polymer; the film also referred to as a thermoplastic liquid crystal polymer film or a liquid crystal polymer film) that has been uniaxially or biaxially drawn, and a method for producing the same.

BACKGROUND ART

Thermoplastic liquid crystal polymer films have excellent low-hygroscopicity, heat resistance, chemical resistance, and electrical properties. Commercialization of the thermoplastic liquid crystal polymer films has been rapidly conducted as an electrical insulation material in printed wiring board etc.

A thermoplastic liquid crystal polymer is comprised of rigid mesogen groups. When the polymer is extruded and molded, the rigid mesogen groups are highly oriented due to shear force generated during the extrusion. The orientation of the mesogen groups also contributes to excellent dimensional stability of the liquid crystal polymer film.

On the other hand, the liquid crystal polymer film is known to have low elongation as a trade-off of the superior dimensional stability.

Furthermore, since the oriented mesogen groups in the liquid crystal polymer do not entangle with each other and flow in a sliding manner, the apparent melt viscosity of the liquid crystal polymer rapidly deteriorates in a low shear rate range. Thus, when the polymer is heated to a temperature near the melting point in order to perform drawing, the fluidity of the polymer suddenly increases so as to fail to perform the drawing of the film alone (at an unsupported state).

Patent Document 1 (JP Laid-open Patent Publication No. 2003-340918) discloses a liquid crystal polymer film that has a melting point of 335°C or higher. The film is obtained by drawing a lamination body of a porous fluoro-resin film and a raw film of a liquid crystal polymer, and subsequently peeling the porous fluoro-resin film from the lamination body.

PATENT DOCUMENT

[Patent Document 1] JP Laid-open Patent Publication No. 2003-340918

SUMMARY OF THE INVENTION

PROBLEM TO BE SOLVED BY THE INVENTION

However, since the liquid crystal polymer film disclosed in this Patent Document must be drawn by using a porous fluoro-resin film, fluorine may transfer to the obtained film. Furthermore, since a special fluorine film must be used, it is difficult to realize mass production and cost reduction of the liquid crystal polymer film.

Therefore, an object of the present invention is to provide a thermoplastic liquid crystal polymer film that can be drawn without utilizing a special support body.

Another object of the present invention is to provide a thermoplastic liquid crystal polymer film with a small variation in thickness (thickness irregularity).

Still another object of the present invention is to provide a thermoplastic liquid crystal polymer film with a small variation in thickness while having a small thickness that is smaller than 50 $\mu$m (particularly 40 $\mu$m or smaller).

Another object of the present invention is to provide a method for efficiently producing the above-described thermoplastic liquid crystal polymer film.

SOLUTION OF THE PROBLEMS

As a result of thorough research for achieving the above described objects, the inventors discovered the followings. Although a liquid crystal polymer film generally has almost negligible elongation, surprisingly, significant increase of elongation is achieved where dielectric constants in the liquid crystal polymer film are adjusted to have

specific values both in a TD direction and in an MD direction. This is a quite unexpected phenomenon in view of the general knowledge that a liquid crystal polymer film has low elongation as a trade-off of having a high dimensional stability.

As a result of further advancing the research based on this discovery, the inventors have discovered: that conventional drawing conditions (i.e., drawing a film being laminated with a support body at a temperature around a melting point) can be avoided in drawing of a liquid crystal polymer film having in-plane dielectric constants of specific values. Such a liquid crystal polymer film can be drawn at a state of simple body film (unsupported film) by specifically controlling thermal conditions. Further, a thickness variation (gage variation) can be highly controlled (suppressed) in the obtained (drawn) liquid crystal polymer film. Based on these findings, the inventors have perfected the present invention.

A method for producing a thermoplastic liquid crystal polymer film according to the present invention, at least includes: preparing a film of a thermoplastic polymer being capable of forming an optically anisotropic melt phase (hereinafter, referred to as a thermoplastic liquid crystal polymer) and having dielectric constants of not larger than 3.25 both in an MD direction and in a TD direction; and performing drawing of the film while heating the film at a temperature in a range from a temperature (Td - 60°C) that is 60°C lower than a heat deformation temperature (Td) of the film to a temperature (Td - 5°C) that is 5°C lower than Td. In the above-described method, the film may be drawn at a state of unsupported simple body (alone).

The above-described method for producing a thermoplastic liquid crystal polymer film may further includes, prior to the drawing of the film, forming a laminated body by bonding a raw film of a thermoplastic liquid crystal polymer and a support body made of, for example, a metal foil; adjusting dielectric constants of the film by subjecting the laminated body to a heat treatment such that dielectric constants in an MD direction and a TD direction of the thermoplastic liquid crystal polymer film after the heating are not larger than 3.25; and separating the support body and the film having the dielectric constants thus adjusted.

Preferably, a heat deformation temperature of the film after the heat treatment in the adjustment of the dielectric constants is 40 to 100°C higher than a heat deformation temperature of the raw film.

Preferably, the temperature of heating during the drawing of the film is within a range from a temperature (Td - 40°C) that is 40°C lower than a heat deformation temperature (Td) of the film subjected to the drawing, to a temperature (Td - 10°C) that is 10°C lower than Td.

A thermoplastic liquid crystal polymer film produced by the above-described method is included in aspects of the present invention, where the film may has a thickness variation of not larger than 10 %. Width of the film in the TD direction may be in a range from 0.2 to 1.2 m. A thickness of the film after the drawing may be 40 μm or smaller.

In the description of the present invention, the raw film denotes a film that is produced by extrusion molding of a molten resin to form a molten sheet, then cooling and taking up the sheet. Where necessary, the molten sheet may be drawn. It should be noted that the MD direction denotes the machine direction of a film, and the TD direction denotes the direction which intersects perpendicularly with the MD direction.

Any combination of at least two constituent elements disclosed in the claims and/or the specification and/or the drawings is also included in the present invention. In particular, any combination of two or more claims recited in the scope of claims is included in the present invention.

## EFFECT OF THE INVENTION

According to a method for producing the thermoplastic liquid crystal polymer film of the present invention, it is possible to draw a film alone by drawing a film having specific dielectric constants in in-plane directions with specific drawing conditions. Thus, the thermoplastic liquid crystal polymer film having reduced thickness variation can be produced efficiently.

In particular, according to the method for producing a thermoplastic liquid crystal polymer film of the present invention, by adjusting the drawing conditions, it is possible to produce a film that has not only a small thickness variation but also has a thickness that can be controlled within a wide range depending on the use of the film in an efficient way.

Where the obtained thermoplastic liquid crystal polymer film with a small thickness variation is used, for example, in a printed wiring board, it is possible to improve reliability of a circuit board.

## DESCRIPTION OF EMBODIMENTS

A production method of the present invention at least includes: preparing a film of a thermoplastic liquid crystal polymer that has dielectric constants of not larger than 3.25 both in an MD direction and in a TD direction; and drawing the film while heating the film at a predetermined temperature.

As long as the thermoplastic liquid crystal polymer film has the above-described dielectric constants, the film can be subjected to drawing at a state of unsupported film (simple-body film, film alone). The method may further include, prior to drawing the film, for example, laminating a support body and a raw film, adjusting dielectric constants of the film,

and separating the support body and the film having the adjusted dielectric constants. The method will be explained below.

(Thermoplastic Liquid Crystal Polymer)

The thermoplastic liquid crystal polymer film (thermotropic liquid crystal polymer film) related to the present invention is constituted of a liquid crystal polymer that is processable in a molten state (or a polymer capable of forming an optically anisotropic melt phase). Chemical formulation of the thermoplastic liquid crystal polymer is not particularly limited to a specific one as long as the liquid crystal polymer can be worked in a molten state. Examples of the polymer may include a thermoplastic liquid crystal polyester, or a thermoplastic liquid crystal polyester amide obtained by introducing an amide bond thereto.

The thermoplastic liquid crystal polymer may be a polymer obtained by further introducing an imide bond, a carbonate bond, a carbodiimide bond, or an isocyanate-derived bond such as an isocyanurate bond to the aromatic polyester or the aromatic polyester amide.

Specific examples of the thermoplastic liquid crystal polymer used in the present invention may include known thermoplastic liquid crystal polyesters and thermoplastic liquid crystal polyester amides obtained from compounds classified as (1) to (4) as exemplified in the following, and derivatives thereof. In order to form a polymer capable of forming an optically anisotropic melt phase, there is a suitable range regarding the combination of various raw-material compounds.

(1) Aromatic or aliphatic dihydroxyl compounds (see Table 1 for representative examples)

[Table 1]

| Chemical structural formulae of representative examples of aromatic or aliphatic dihydroxyl compounds |
|---|
| 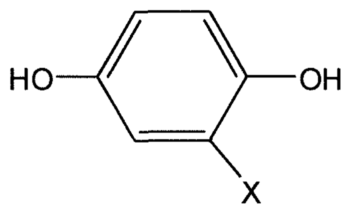 X represents a hydrogen atom or a halogen atom, or a group such as a lower alkyl (e.g., $C_{1-3}$ alkyl) or a phenyl |
| 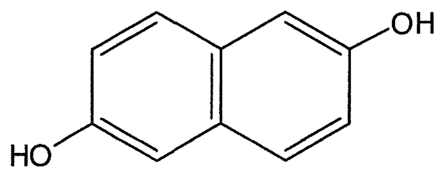 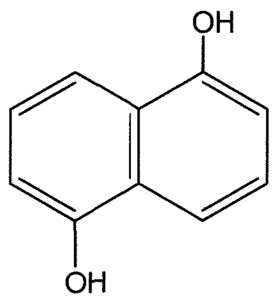 |
| 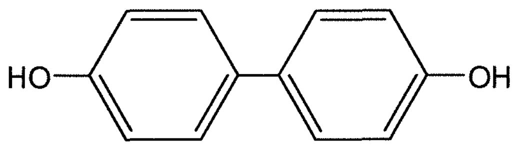 |
| 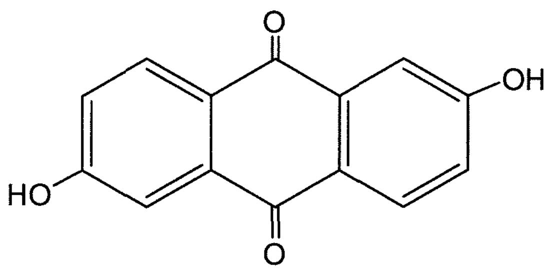 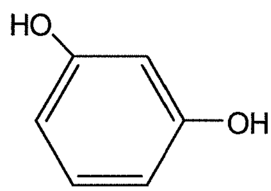 |

(continued)

| Chemical structural formulae of representative examples of aromatic or aliphatic dihydroxyl compounds | |
|---|---|
| 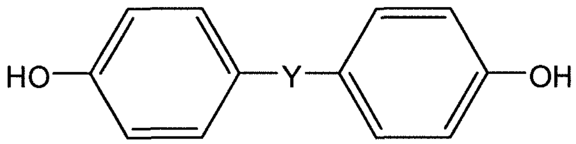 | Y represents a group such as -O-, $-CH_2-$, -S-, -CO-, $-C(CH_3)_2-$, or $-SO_2-$ |
| $HO(CH_2)_nOH$ | n is an integer of 2 to 12 |

(2) Aromatic or aliphatic dicarboxylic acids (see Table 2 for representative examples)

[Table 2]

| Chemical structural formulae of representative examples of aromatic or aliphatic dicarboxylic acids | |
|---|---|
| 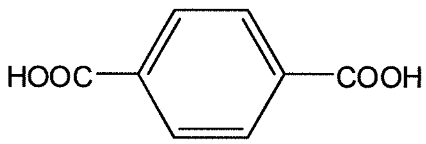 | 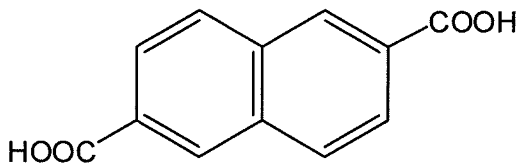 |
| 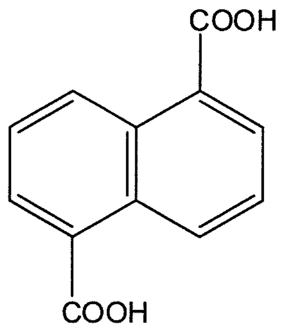 | 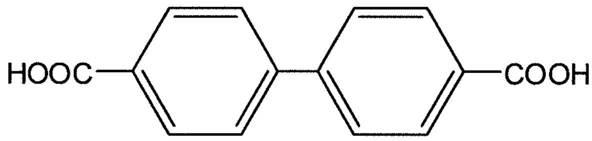 |
| 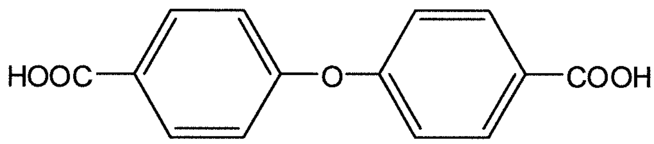 | |
| 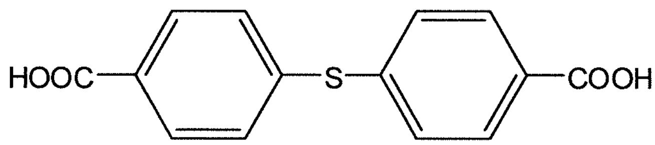 | |
| 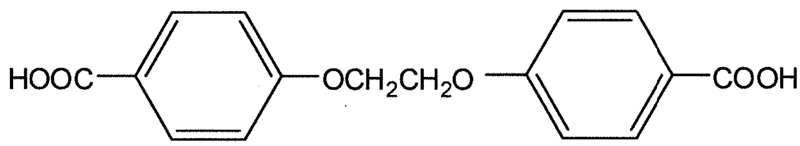 | |
| 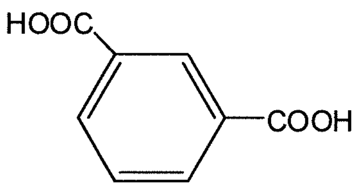 | |
| $HOOC(CH_2)_nCOOH$ | n is an integer of 2 to 12 |

(3) Aromatic hydroxycarboxylic acids (see Table 3 for representative examples)

[Table 3]

| Chemical structural formulae of representative examples of aromatic or aliphatic hydroxycarboxylic acids | |
|---|---|
| 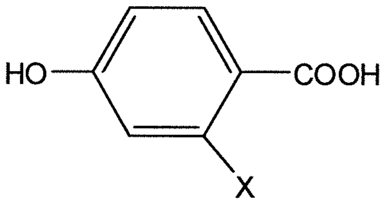<br>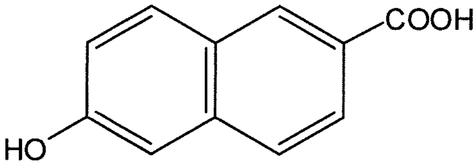<br>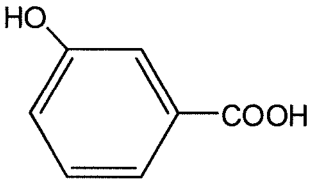 | X represents a hydrogen atom or a halogen atom, or a group such as a lower alkyl (e.g., $C_{1-3}$ alkyl) or a phenyl<br>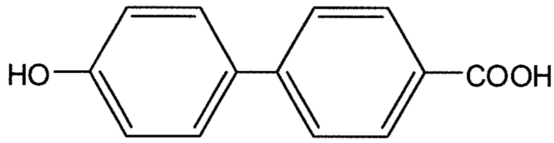 |

(4) Aromatic diamines, aromatic hydroxy amines, and aromatic aminocarboxylic acids (see Table 4 for representative examples)

[Table 4]

| Chemical structural formulae of representative examples of aromatic diamines, aromatic hydroxy amines, or aromatic aminocarboxylic acids |
|---|
| 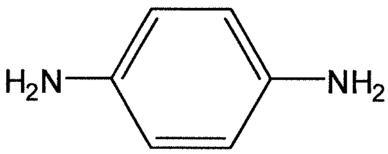 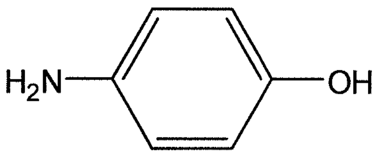 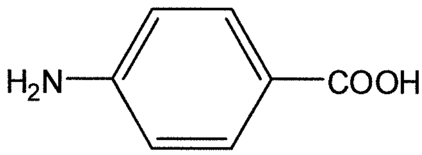 |

Representative examples of liquid crystal polymers obtained from these raw-material compounds may include copolymers having structural units shown in Tables 5 and 6.

[Table 5]

| Representative examples (1) of thermoplastic liquid crystal polymer | |
|---|---|
| (A) | 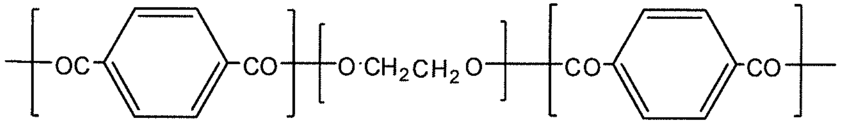 Copolymer |
| (B) | 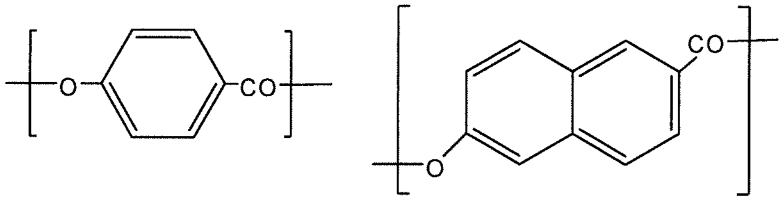 Copolymer |
| (C) | 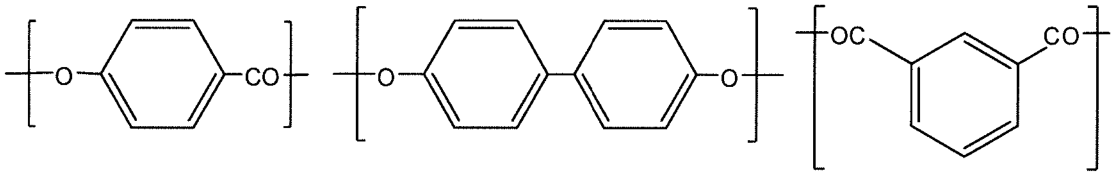 Copolymer |
| (D) | 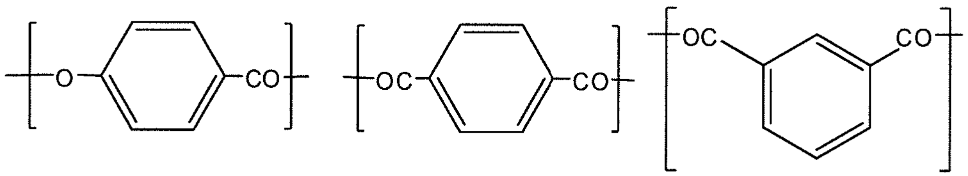 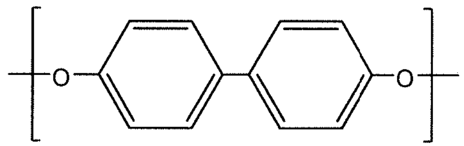 Copolymer |
| (E) | 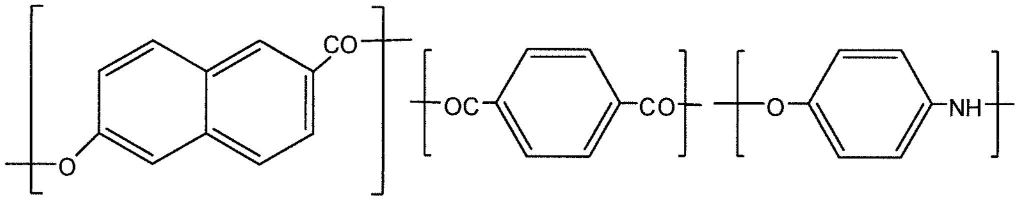 Copolymer |

(continued)

| Representative examples (1) of thermoplastic liquid crystal polymer | |
|---|---|
| (F) | 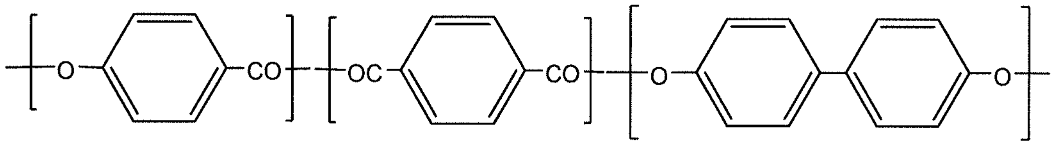 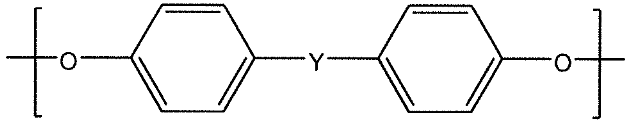 Copolymer<br>Y is a group such as -O-, $-CH_2-$, or -S- |

[Table 6]

| Representative examples (2) of thermoplastic liquid crystal polymer | |
|---|---|
| (G) | 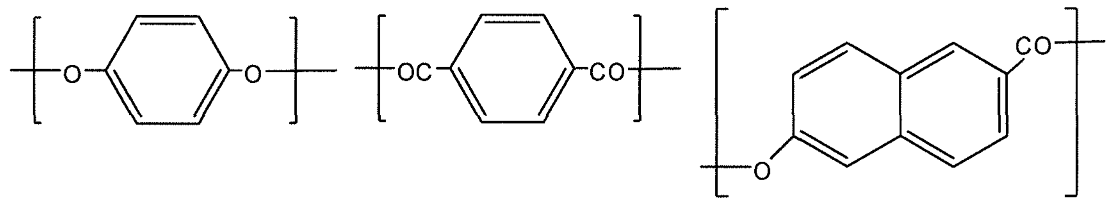 Copolymer |
| (H) | 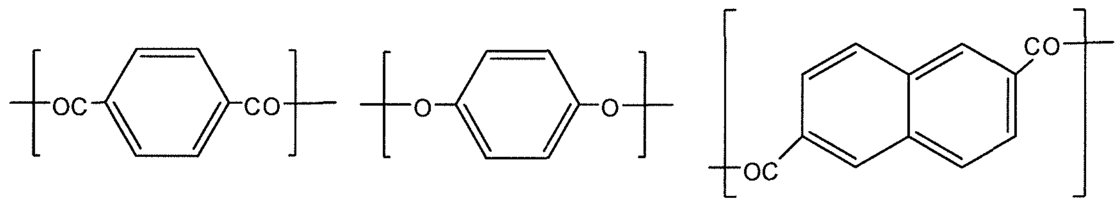 Copolymer |
| (I) | 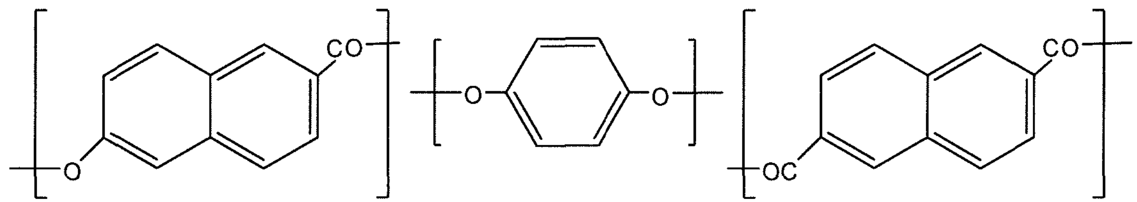 Copolymer |

(continued)

| Representative examples (2) of thermoplastic liquid crystal polymer | |
|---|---|
| (J) | 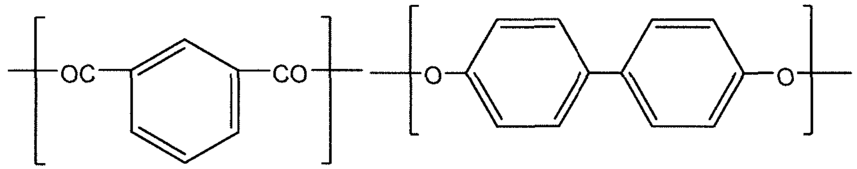<br>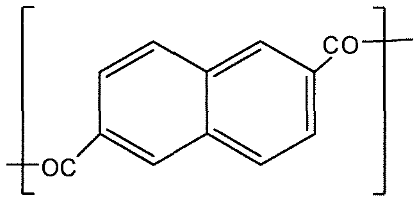 Copolymer |

Of these copolymers, polymers including at least p-hydroxybenzoic acid and/or 6-hydroxy-2-naphthoic acid as repeating units are preferred. Particularly preferred examples include:

a polymer (i) having repeating units of p-hydroxybenzoic acid and 6-hydroxy-2-naphthoic acid, and
a polymer (ii) having repeating units of
at least one aromatic hydroxycarboxylic acid selected from a group consisting of p-hydroxybenzoic acid and 6-hydroxy-2-naphthoic acid,
at least one aromatic diol selected from a group consisting of 4,4'-dihydroxybiphenyl and hydroquinone, and
at least one aromatic dicarboxylic acid selected from a group consisting of terephthalic acid, isophthalic acid, and 2,6-naphthalene dicarboxylic acid.

For example, where the thermoplastic liquid crystal polymer is a polymer (i) at least having repeating units of at least p-hydroxybenzoic acid and 6-hydroxy-2-naphthoic acid, the mole ratio (A)/(B) of p-hydroxybenzoic acid (A) and 6-hydroxy-2-naphthoic acid (B) in the polymer preferably satisfies (A)/(B) = about 10/90 to about 90/10, more preferably (A)/(B) = about 50/50 to about 85/15, more preferably (A)/(B) = about 60/40 to about 80/20.
Furthermore, where the thermoplastic liquid crystal polymer is a polymer (ii) having repeating units of at least one aromatic hydroxycarboxylic acid (C) selected from a group consisting of p-hydroxybenzoic acid and 6-hydroxy-2-naphthoic acid, at least one aromatic diol (D) selected from a group consisting of 4,4'-dihydroxybiphenyl and hydroquinone, and at least one aromatic dicarboxylic acid (E) selected from a group consisting of terephthalic acid, isophthalic acid and 2,6-naphthalene dicarboxylic acid, mole ratio of the repeating units may satisfy aromatic hydroxycarboxylic acid (C) : aromatic diol (D) : aromatic dicarboxylic acid (E) = about 30 to about 80 : about 35 to about 10 : about 35 to about 10, more preferably (C):(D):(E) = about 35 to about 75 : about 32.5 to about 12.5 : about 32.5 to about 12.5, and further preferably (C):(D):(E) = about 40 to about 70 : about 30 to about 15 : about 30 to about 15.
Preferably, mole ratio of a repeating structural unit derived from an aromatic dicarboxylic acid (E) and a repeating structural unit derived from an aromatic diol (D) satisfies (D)/(E) = 95/100 to 100/95. Deviation from this range may tend to result in insufficient improvement in polymerization and deterioration in mechanical strength.
For example, optical anisotropy in a molten state described in the present invention can be recognized, for example, by placing a sample on a hot stage, heating the sample with an elevating temperature under nitrogen atmosphere, and observing light transmission through the sample.
The thermoplastic liquid crystal polymer may preferably have a melting point (hereinafter, referred to as Tm) in the range of 260 to 360°C, more preferably in the range of 270 to 350°C. Tm may be determined by measuring a temperature at which a main endothermic peak appears in measurement using a differential scanning calorimeter (DSC of Shimadzu Corporation).
As long as the advantageous effect of the present invention is not deteriorated, if desired, the above-described thermoplastic liquid crystal polymer may be added with thermoplastic polymer(s), various additive agent(s), filler(s) or the like, where examples of the thermoplastic polymer include a polyethylene terephthalate, a modified polyethylene terephthalate, a polyolefin, a polycarbonate, a polyarylate, a polyamide, a polyphenylene sulfide, a polyester ether ketone, and a fluorine resin.
By using the thermoplastic liquid crystal polymer described above, an intended thermoplastic liquid crystal polymer film can be produced through each of the following steps.

(Lamination Step)

A raw film of the thermoplastic liquid crystal polymer used in the present invention is obtained by extrusion molding of the thermoplastic liquid crystal polymer. Any extrusion method can be applied as long the directions of the rigid rod-shaped molecules of the thermoplastic liquid crystal polymer can be controlled. As the extrusion method, a commonly known T-die method, lamination-body drawing method, inflation method, and the like are industrially advantageous. In particular, the inflation method and the lamination-body drawing method can apply stress not only in a machine direction (hereinafter, abbreviated as an MD direction) of the film, but also in a direction (hereinafter, abbreviated as a TD direction) perpendicular to the MD direction, and provide a film in which dielectric properties are controlled in the MD direction and in the TD direction.
In the extrusion molding, it is preferable to perform a drawing process in association with the extrusion in order to control the orientation. For example, for the extrusion molding by the T-die method, a molten sheet extruded from a T-die may be drawn not only in the machine direction of the film (hereinafter, abbreviated as the MD direction) but also in the direction (hereinafter, abbreviated as the TD direction) perpendicular to the MD direction simultaneously. Alternatively, the molten sheet extruded from the T-die may be once drawn in the MD direction, and then be drawn in the TD direction.
Furthermore, for the extrusion molding by the inflation method, a cylindrical molten sheet melt-extruded from

a ring die may be drawn at a predetermined draw ratio (corresponding to the draw ratio in the MD direction) and a predetermined blow ratio (corresponding to the draw ratio in the TD direction).

A laminated body of the obtained raw film and a support body can be produced in accordance with a method known in the art. The support body is not particularly limited as long as the support body has a melting point that is higher than that of the liquid crystal polymer film that is being heated, and examples thereof include inorganic materials such as glass and various metallic foils. Examples of metal forming the metallic foil include copper, gold, silver, nickel, and aluminum. Among them, copper and aluminum are suitable, and aluminum is particularly suitable.

The raw film may be bonded with a support body to form a laminated body, for example, by thermocompression bonding, or by bonding the raw film and the support body with an adhesive, where the thermocompression bonding is preferred as a method of bonding the raw film and the support body. The thermocompression bonding may be performed using, for example, a thermal press, a thermal roller, and the like that are known in the art.

A layer configuration of the laminated body is not particularly limited. For example, a plurality of raw films and a plurality of support bodies may be laminated to form the laminated body. For example, the laminated body may have a two-layer structure in which a support body is laminated on one surface of the raw film, a three-layer structure in which each of support bodies are laminated on both surfaces of the raw film, or a three-layer structure in which each of the raw films are laminated on both surfaces of a support body. Among those described above, the two-layer structure is preferred.

(Adjustment of Dielectric Constant)

In the adjustment of dielectric constants, the laminated body is subjected to a heat treatment, and thereby controlling the film to have a specific dielectric constant in the TD direction and a specific dielectric constant in the MD direction. For example, the above-described heat treatment may be performed by successively supplying the laminated body into a heating device and heating the laminated body at a temperature in a range, for example, from a temperature (Tm - 15°C) that is 15°C lower than the melting point (Tm) of the raw film to a temperature (Tm+30 °C) that is 30°C higher than the melting point.

Preferably, the heating temperature may be in a range from a temperature of (Tm - 10°C) that is 10°C lower than the melting point (Tm) of the raw film to a temperature (Tm+20°C) that is 20°C higher than the melting point. The heat treatment may be performed using a device known in the art, for example, a hot-blast circulation furnace, a thermal roll, and a ceramic heater or the like.

The heating time may be a short period of time of, for example, about 3 to 300 seconds, and preferably about 5 to 60 seconds.

The heat treatment in the adjustment of dielectric constants may be performed by combining a short-time heat treatment and a long-time heat treatment. Where necessary, after the above-described heat treatment of short time, the long-time heat treatment may be performed by heating the laminated body at a temperature in a range from a temperature of (Tm - 40°C) that is 40°C lower than the melting point (Tm) of the raw film to a temperature of (Tm - 5°C) that is 5°C lower than the melting point, for a long period of time (for example, about 2 to 24 hours, and preferably about 4 to 16 hours).

During the above-described long-time heat treatment, the melting point of the raw film may rise as a result of heating. In such a case, the heating may be performed in a plurality of stages in accordance with the rise of the melting point of the heated film.

For example, the below-described heat treatment may be applied as the above-described long-time heat treatment of a plurality of stages.

In a first stage, a heat treatment is carried out at a temperature in a range from a thermal deformation temperature Td°C of the polymer film to a temperature $\alpha$°C lower than the melting point Tm of the polymer film before the heat treatment, i.e., Td°C to (Tm - $\alpha$°C), until a fusion peak temperature TA of the polymer film attains a temperature $TA_1$ which is $\beta$°C higher than the melting point Tm of the polymer film before the heat treatment, where $\alpha$ is in a range from 5 to 35 and $\beta$ is in a range from 5 to 30.

In a second stage, a heat treatment is carried out at a temperature in a range from a temperature not lower than the melting point Tm of the polymer film before the heat-treatment to a temperature lower than the fusion peak temperature $TA_1$ until the fusion peak temperature is increased from $TA_1$ to $TA_2$ that is $\gamma$°C higher than $TA_1$, wherein $\gamma$ is in a range from 5 to 20.

In an n-th stage, a heat treatment is carried out at a temperature not lower than the fusion peak temperature $TA_{n-2}$ and lower than the fusion peak temperature $TA_{n-1}$ until the fusion peak temperature is increased from $TA_{n-1}$ to $TA_n$ that is $\gamma$°C higher than $TA_{n-1}$, wherein n is an integer equal to or larger than 3 and $\gamma$ is in a range from 5 to 20.

By performing the above-described long-time heat treatment, the molecular weight of the thermoplastic polymer in the film can be increased. As described herein, the fusion peak temperature (TA) refers to a temperature corresponding to positions of endothermic peaks that appear during and after heating the film at a heating rate of 5°C/minute.

The heat treatment may be performed on the film that is under tension or not under tension (under relaxation)

in a heating device such as a hot-blast circulation furnace, a thermal roll, and a ceramic heater. Furthermore, the heat treatment may be performed on the film in a roll shape (gaps are provided therein for preventing contact within), in a shape of a hank (the film is wound together with a spacer with fine gas permeability such as a spacer of a Vectran nonwoven fabric capable of absorbing expansion and contraction thereof during heating), or in a shape of a tow (in this case, the film is placed, for example, on a wire net or the like.). Furthermore, when applying heat, the temperature of the heating device may be increased step-by-step.

By continuously applying heat in the above-described temperature range, the molecular weight can be increased while the molecular orientation is disordered. The increase in the molecular weight can be confirmed through the rise in the heat deformation temperature of the film. For example, the heat deformation temperature of the film may increase above the heat deformation temperature of the raw film by, for example, about 40 to 90°C, and preferably about 50 to 80°C.

As a new finding that was not expected in the prior arts but was obtained by the present invention, drawing of an unsupported liquid crystal polymer film at a low temperature was made possible by controlling the dielectric constants both in the MD direction and the TD direction to specific values. It is considered that the drawing of the unsupported film was made possible probably because of entanglement of molecules in the liquid crystal polymer film in the following manner. Originally, molecules of liquid crystal polymer are hardly entangled with each other due to their rigidity. It is considered that the entanglement of liquid crystal polymer molecules would occur since the molecular orientation is disordered at the same level in in-plane direction of the film and also disordered in the thickness direction of the film by the treatment for controlling the film to have low dielectric constants both in the MD direction and TD direction in the film plane.

The drawability of the film becomes particularly significant where the dielectric constants are set at a specific state and the molecular weight of the molecules in the film is increased by heating. Thus, in this case, as a result of additional heating at a high temperature for a long period of time in a state where the molecular orientation within the film plane is disordered in the comparable degree, entanglement between the molecules can be increased, and drawability of the unsupported film can be improved.

(Separation of the laminated body)

After the molecular weight of the liquid crystal polymer constituting the film is increased, the film is separated from the support body. Separation may be performed, for example, by etching away the support body, or by physically peeling the film from the support body.

(Drawing of the film)

The film separated from the support body, or the prepared film of the thermoplastic liquid crystal polymer has dielectric constants of not larger than 3.25 both in the MD direction and the TD direction.

The film is heated and drawn at a heating temperature in a range from a temperature (Td - 60°C) that is 60°C lower than a heat deformation temperature (Td) of the film subjected to the drawing to a temperature (Td - 5°C) that is 5°C lower than Td. Preferably, the heating temperature may be in a range from a temperature (Td - 40°C) that is 40°C lower than a heat deformation temperature (Td) of the separated film to a temperature (Td - 10°C) that is 10°C lower than Td.

As the drawing method, one that is known in the art such as either biaxial drawing or uniaxial drawing may be used. Biaxial drawing is preferred since the degree of molecular orientation can be controlled more easily. As the drawing, uniaxial drawing machines, simultaneous biaxial drawing machines, sequential biaxial drawing machines and the like known in the art can be used.

Where the film is biaxially drawn, there are two drawing directions, i.e., the MD direction and the TD direction described above. The draw ratio in one direction of either the MD direction or the TD direction may be controlled, or the draw ratios in both directions may be controlled simultaneously. Regarding the drawing speed, similarly to the draw ratio, the drawing speed in one direction of either the MD direction or the TD direction may be controlled, or the drawing speed in both directions may be controlled simultaneously.

The draw ratio may be set at an appropriate value in accordance with the thickness of the raw film and the desired thickness of the liquid crystal polymer film. For example, the draw ratio may be in the range of 1.1- to 15-times (fold), and preferably 1.5- to 8-times. The drawing speed is ordinarily in a range of 5 to 100%/second, and preferably 10 to 80%/second.

The thermoplastic liquid crystal polymer film of the present invention can be obtained through the drawing described above.

(Thermoplastic Liquid Crystal Polymer Film)

Since the obtained thermoplastic liquid crystal polymer film of the present invention may be drawn at low temperature conditions without using a support body, the film has small thickness variation (gap variation, or thickness irregularity). For example, the thermoplastic liquid crystal polymer film may have a thickness variation of not larger than 10%, preferably not larger than 7%, and more preferably not larger than 5%. The thickness variation as described herein is a value measured using a method described later in the Examples.

Furthermore, the thickness of the thermoplastic liquid crystal polymer film can be adjusted, for example, not only by adjusting the thickness of the raw film, but also by adjusting the draw ratio. For example, it is possible to efficiently produce a film with a thickness of less than 50 μm, which has been conventionally difficult to produce. For example, the thickness of the thermoplastic liquid crystal polymer film may be 40 μm or less, and preferably 30 μm or less. The lower limit value of the thickness of the thermoplastic liquid crystal polymer film can be determined in accordance with need. For example, a lower limit value may be about 5 μm.

Since the thermoplastic liquid crystal polymer film can be drawn as an unsupported simple film, drawing conditions are not affected by the presence of a support body. The width of the film after drawing in the TD direction may be, for example, about 0.2 to 1.5 m, and preferably about 0.5 to 1.2 m.

The melting point of the thermoplastic liquid crystal polymer film after the drawing may be, for example about 300 to 350°C, and preferably about 320 to 340°C.

EXAMPLES

In the following, the present invention will be described in more detail based on Examples. It should be noted that the present invention is not limited to these Examples. In the following Examples and Comparative Examples, physical properties were measured with the method described below.

[Melting Point]

Melting point of a film was determined based on the observation of thermal behavior of the film using a differential scanning calorimeter. A test film was heated at a rate of 20°C/minute to completely melting the film, and the melt was rapidly cooled to 50°C at a rate of 50°C/minute. Subsequently, the quenched material was reheated at a heating rate of 20°C/minute, and a position of an endothermic peak appearing in the reheating process was recorded as a melting point of the film.

[Heat Deformation Temperature]

A test sample film having a width of 5 mm and a length of 20 mm was placed in a thermomechanical analyzer (TMA). While applying a tensile load of 1 g to both ends of the test sample, temperature was raised from room temperature with a heating rate of 5°C/minute until rupture of the film occurred. The temperature at which rapid expansion (elongation) of the film occurred was recorded as a heat deformation temperature. Specifically, the heat deformation temperature was determined as a temperature of an intersection of a tangent line to a base line on low temperature side and a tangent line to a base line on high temperature side of temperature-deformation curve.

[Film Thickness and Thickness variation]

Film thicknesses of each of obtained films were measured at an interval of 1 cm in the TD direction using a digital thickness meter (manufactured by Mitutoyo Corp.), and an average of thicknesses of ten points selected arbitrarily in the center part and both end parts was used as an average film thickness. A thickness variation (thickness irregularity or gage variation) R can be represented by the following formula:

$$R = (L_{max}-L_{min}) / 2L_a \times 100$$

where $L_{max}$, $L_{min}$, and $L_a$ are respectively the maximum value, the minimum value, and an average value of thicknesses of 30 points that were obtained by arbitrarily selecting 10 positions from film thicknesses of the center part and both end parts in each of TD directions with 1-meter interval in lengthwise direction of a roll-shaped film, wherein the film thicknesses of each of the end parts were measured at points in a range from each end of the film to the center of the film in the TD direction by 10% of the width of the film.

[Dielectric Constant]

The dielectric constants at 15 GHz in the MD direction and the TD direction of each sample obtained from each of the films were measured at room temperature (25°C), using a molecular orientation analyzer "MOA6015" manufactured by Oji Scientific Instruments Co., Ltd.

(Example 1)

A thermoplastic liquid crystal polymer having a melting point of 280°C that was a copolymerization product of p-hydroxybenzoic acid and 6-hydroxy-2-naphthoic acid (mole ratio: 73/27) was heat-kneaded in a single screw extruder, and melt-extruded from a cyclic inflation die having a die diameter of 33.5 mm and a die slit gap of 1 mm at a die shear rate of 500 $second^{-1}$ under drawing conditions of a lengthwise draw ratio (Dr) of 2.9 and a transvers draw ratio (B1) of 6.2 to obtain a film having a melting point of 280°C and a thickness of 100 μm. The heat deformation temperature of the film was 260°C.

Using a thermal roll press device equipped with a heat-resistant rubber roll (hardness of 90 degrees; JIS A) and a heatable metal roll, the thermoplastic liquid crystal polymer film and an aluminum foil having a thickness of 50 μm were compression-bonded under conditions of heating temperature of 260°C, roll pressure of 10 $kg/cm^2$, and a roll speed of 3 m/minute, thereby producing a laminated body having a configuration of thermoplastic liquid crystal polymer film / aluminum foil. The laminated body was placed for 30 seconds in a hot-blast circulation type heating furnace controlled at 280°C.

Under a nitrogen atmosphere, the laminated body was heat treated for 4 hours at 260°C, and further heat treated for 8 hours at 270°C. After that, the aluminum foil was carefully peeled off to obtain an unsupported film (simple body film). The heat deformation temperature of the obtained film was 330°C, and its dielectric constants in the MD direction and the TD direction were both 3.22.

Next, the film was drawn at a drawing temperature of 300°C and draw ratios of 2-times(fold) in the MD direction and 2.5-times in the TD direction at a drawing speed of 25%/second using a biaxial drawing machine to obtain a liquid crystal polymer film (melting point: 335°C) having a thickness of 20 μm. The tolerance of the thickness of the film was 1.5 μm (thickness variation: 3.75%).

(Comparative Example 1)

A thermoplastic liquid crystal polymer having a melting point of 280°C that was a copolymerization product of p-hydroxybenzoic acid and 6-hydroxy-2-naphthoic acid (mole ratio: 73/27) was heat-kneaded in a single screw extruder, and melt-extruded from a cyclic inflation die having a die diameter of 33.5 mm and a die slit gap of 400 μm at a die shear rate of 1000 $second^{-1}$ under drawing conditions of a lengthwise draw ratio (Dr) of 2.9 and a transvers draw ratio (B1) of 6.2 to obtain a film having a melting point of 280°C and a thickness of 20 μm. The heat deformation temperature of the film was 260°C.

Using a thermal roll press device equipped with a heat-resistant rubber roll (hardness of 90 degrees; JIS A) and a heatable metal roll, the thermoplastic liquid crystal polymer film and an aluminum foil having a thickness of 50 μm were compression-bonded under conditions of heating temperature of 260°C, roll pressure of 10 $kg/cm^2$, and a roll speed of 3 m/minute, thereby producing a laminated body having a configuration of thermoplastic liquid crystal polymer film / aluminum foil. The laminated body was placed for 30 seconds in a hot-blast circulation type heating furnace controlled at 280°C.

Under a nitrogen atmosphere, the laminated body was heat treated for 4 hours at 260°C, and further heat treated for 7 hours at 270°C. After that, the aluminum foil was carefully peeled off to obtain an unsupported film having a thickness of 20 μm. The heat deformation temperature of the obtained film was 330°C, and its dielectric constants in the MD direction and the TD direction were both 3.23. However, the tolerance of the thickness of the film was 3 μm (thickness variation: 7.5%).

(Comparative Example 2)

A thermoplastic liquid crystal polymer having a melting point of 280°C that was a copolymerization product of p-hydroxybenzoic acid and 6-hydroxy-2-naphthoic acid (mole ratio: 73/27) was heat-kneaded in a single screw extruder, and melt-extruded from a cyclic inflation die having a die diameter of 33.5 mm and a die slit gap of 1 mm at a die shear rate of 500 $second^{-1}$ under drawing conditions of a lengthwise draw ratio (Dr) of 2.9 and a transvers draw ratio (B1) of 6.2 to obtain a film having a melting point of 280°C and a thickness of 100 μm. The heat deformation temperature of the film was 260°C.

Using a thermal roll press device equipped with a heat-resistant rubber roll (hardness of 90 degrees; JIS A)

and a heatable metal roll, the thermoplastic liquid crystal polymer film and an aluminum foil having a thickness of 50 μm were compression-bonded under conditions of heating temperature of 260°C, roll pressure of 10 kg/cm$^2$, and a roll speed of 3 m/minute, thereby producing a laminated body having a configuration of thermoplastic liquid crystal polymer film / aluminum foil. The laminated body was placed for 30 seconds in a hot-blast circulation type heating furnace controlled at 280°C.

Under a nitrogen atmosphere, the laminated body was heated for 4 hours at 260°C, and further heated for 8 hours at 270°C. After that, the aluminum foil was carefully peeled off to obtain an unsupported film. The heat deformation temperature of the obtained film was 330°C, and its dielectric constants in the MD direction and the TD direction were both 3.22.

Next, an attempt to biaxially draw this film at a drawing temperature of 350°C was made, but the film could not be drawn due to melting of the film.

(Comparative Example 3)

A thermoplastic liquid crystal polymer having a melting point of 280°C that was a copolymerization product of p-hydroxybenzoic acid and 6-hydroxy-2-naphthoic acid (mole ratio: 73/27) was heat-kneaded in a single screw extruder, and melt-extruded from a cyclic inflation die having a die diameter of 33.5 mm and a die slit gap of 1 mm at a die shear rate of 500 second$^{-1}$ under drawing conditions of a lengthwise draw ratio (Dr) of 2.9 and a transvers draw ratio (B1) of 6.2 to obtain a film having a melting point of 280°C and a thickness of 100 μm. The heat deformation temperature of the film was 260°C. The dielectric constant in the MD direction of the film was 3.34, and the dielectric constant in the TD direction of the film was 3.27.

Next, an attempt to draw this film was made, but the film could not be drawn due to fracture of the film.

INDUSTRIAL APPLICABILITY

The thermoplastic liquid crystal polymer film of the present invention can be utilized as a material of circuit board of various electric and electronic products. Furthermore, according to the production method of the present invention, thermoplastic liquid crystal polymer films having a thickness of wide range can be produced efficiently with a small thickness variation.

Although the present invention has been fully described in connection with the preferred embodiments thereof, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

**Claims**

1. A method for producing a thermoplastic liquid crystal polymer film, at least comprising:

   preparing a film of a thermoplastic polymer being capable of forming an optically anisotropic melt phase (hereinafter, referred to as a thermoplastic liquid crystal polymer) and having dielectric constants of not larger than 3.25 both in an MD direction and in a TD direction; and
   performing drawing of the film while heating the film at a temperature in a range from a temperature (Td - 60°C) that is 60°C lower than a heat deformation temperature (Td) of the film to a temperature (Td - 5°C) that is 5°C lower than Td.

2. The method for producing a thermoplastic liquid crystal polymer film according to claim 1, wherein the film is drawn alone without utilizing a support body in the drawing of the film.

3. The method for producing a thermoplastic liquid crystal polymer film according to claim 1 or 2, the method further comprising, prior to the drawing of the film:

   forming a laminated body by bonding a support body and a raw film of a thermoplastic liquid crystal polymer;
   performing adjustment of dielectric constants by subjecting the laminated body to a heat treatment such that dielectric constants in an MD direction and in a TD direction of the thermoplastic liquid crystal polymer film after the heat treatment are not larger than 3.25; and
   separating the support body and the film having the dielectric constants thus adjusted.

4. The method for producing a thermoplastic liquid crystal polymer film according to claim 3, wherein a heat deformation temperature of the film after the heat treatment in the adjustment of dielectric constants is 40 to 100°C higher than a heat deformation temperature of the raw film.

5. The method for producing a thermoplastic liquid crystal polymer film according to any one of claims 1 to 4, wherein the temperature of heating during the drawing of the film is in a range from a temperature (Td - 40°C) that is 40°C lower than a heat deformation temperature (Td) of the film subjected to the drawing to a temperature (Td - 10°C) that is 10°C lower than Td.

6. The method for producing a thermoplastic liquid crystal polymer according to any one of claims 3 to 5, wherein the support body is made of a metallic foil.

7. A thermoplastic liquid crystal polymer film produced by the method as claimed in any one of claims 1 to 6.

8. The thermoplastic liquid crystal polymer film according to claim 7, wherein a thickness variation of the thermoplastic liquid crystal polymer film is not larger than 10%.

9. The thermoplastic liquid crystal polymer film according to claim 7 or claim 8, wherein a width of the thermoplastic liquid crystal polymer film in a TD direction is in a range from 0.2 to 1.2 m.

## INTERNATIONAL SEARCH REPORT

International application No.
PCT/JP2013/056387

**A. CLASSIFICATION OF SUBJECT MATTER**

*B29C55/02*(2006.01)i, *C08J5/18*(2006.01)i, *B29K67/00*(2006.01)n, *B29L7/00* (2006.01)n, *B29L9/00*(2006.01)n

According to International Patent Classification (IPC) or to both national classification and IPC

**B. FIELDS SEARCHED**

Minimum documentation searched (classification system followed by classification symbols)
B29C55/00-55/30, B29C61/00-61/10, C08J5/18, B29K67/00, B29L7/00, B29L9/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| A | JP 4-168129 A (Unitika Ltd.), 16 June 1992 (16.06.1992), entire text (Family: none) | 1-9 |
| A | JP 57-41934 A (Celanese Corp.), 09 March 1982 (09.03.1982), entire text & US 4325903 A & EP 44675 A1 | 1-9 |
| A | JP 2010-229200 A (Kuraray Co., Ltd.), 14 October 2010 (14.10.2010), entire text (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 May, 2013 (24.05.13) | 04 June, 2013 (04.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/056387

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-186614 A (Kuraray Co., Ltd.), 27 July 1993 (27.07.1993), entire text (Family: none) | 1-9 |
| A | JP 2001-9977 A (Toray Industries, Inc.), 16 January 2001 (16.01.2001), entire text (Family: none) | 1-9 |
| A | JP 2002-29002 A (Toray Industries, Inc.), 29 January 2002 (29.01.2002), entire text & US 6605324 B1 & WO 2001/025007 A1 | 1-9 |
| A | JP 2005-1376 A (Kuraray Co., Ltd.), 06 January 2005 (06.01.2005), entire text & US 2004/0232603 A1 & CN 1572468 A | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012075609 A
- JP 2003340918 A